(19) Europäisches Patentamt
European Patent Office
Office européen des brevets

(11) **EP 1 014 062 A1**

(12) **EUROPÄISCHE PATENTANMELDUNG**

(43) Veröffentlichungstag:
   **28.06.2000 Patentblatt 2000/26**

(51) Int. Cl.$^7$: **G01K 17/06**

(21) Anmeldenummer: **98811261.1**

(22) Anmeldetag: **23.12.1998**

(84) Benannte Vertragsstaaten:
   **AT BE CH CY DE DK ES FI FR GB GR IE IT LI LU MC NL PT SE**
   Benannte Erstreckungsstaaten:
   **AL LT LV MK RO SI**

(71) Anmelder: **Bernina Electronic AG**
   **8266 Steckborn (CH)**

(72) Erfinder: **Ruhland, Michael**
   **78337 Oehningen-Wangen (DE)**

(74) Vertreter:
   **AMMANN PATENTANWAELTE AG BERN**
   **Schwarztorstrasse 31**
   **3001 Bern (CH)**

(54) **Verfahren zur Ermittlung des Energieverbrauchs von einer Vielzahl von Heizkörpern**

(57)    Verfahren zur Ermittlung des Energieverbrauchs von einer Vielzahl von Heizkörpern, bei welchem Verfahren die Temperatur jedes Heizkörpers gemessen wird. Um den Gesamtbewertungsfaktor für jeden Heizkörper zu einem beliebigen Zeitpunkt nach der Inbetriebnahme eingeben zu können und gleichzeitig eine Umbewertung der bisher aufgelaufenen Verbrauchseinheiten vornehmen zu können ist das erfindungsgemässe Verfahren dadurch gekennzeichnet, dass

(a) in einem auf jedem Heizkörper montierten Messgerät anhand der gemessenen Temperaturwerte unbewertete Verbrauchseinheiten ($E_{1u}'$, $E_{2u}'$) des Wärmeverbrauchs berechnet werden,
(b) bei jedem Heizkörper die unbewerteten Verbrauchseinheiten in dem auf ihm montierten Messgerät aufaddiert werden, um ihre Summe zu bilden, und
(c) diese Summe im Messgerät und in einer Abrechnungszentrale mit einem oder mehreren Bewertungsfaktoren multipliziert wird, um einen bewerteten Wert des Wärmeverbrauchs des Heizkörpers zu erhalten, wobei wenigstens einer der Bewertungsfaktoren ($K_{c2}$) den physikalischen Eigenschaften des Heizkörpertyps entspricht, die für die Ermittlung des Wärmeverbrauchs relevant sind.

Fig. 2

EP 1 014 062 A1

Printed by Xerox (UK) Business Services
2.16.7 (HRS)/3.6

**Beschreibung**

Die Erfindung betrifft ein Verfahren zur Ermittlung des Energieverbrauchs von einer Vielzahl von Heizkörpern, bei welchem Verfahren die Temperatur jedes Heizkörpers gemessen wird.

Zur Messung des Wärmeverbrauchs wird auf jedem Heizkörper als Messgerät ein sogenannter Heizkostenverteiler montiert, welche mit einem oder mit zwei Fühlern für Temperaturmessung ausgerüstet ist. Ein Messgerät mit nur einem Fühler misst lediglich die Temperatur des Heizkörpers. Ein Messgerät mit zwei Fühlern misst zusätzlich die Umgebungs- oder Raumtemperatur. Die Bewertungsfaktoren, die erforderlich sind um den effektiven Wärmeverbrauch eines Heizkörpers nach den geltenden Normen zu berechnen, werden - sofern vorhanden - in das Messgerät bereits bei ihrer Montage auf dem Heizkörper eingegeben und dort gespeichert.

Der mit dem Messgerät zunächst in Form von unbewerteten Verbrauchseinheiten ermittelte Wärmeverbrauch eines Heizkörpers wird nach dem derzeitigen Stand der Technik laufend mit einem Gesamtbewertungsfaktor bewertet, der einen Bewertungsfaktor enthält, welcher den physikalischen Eigenschaften des Heizkörpertyps entspricht, die für die Ermittlung des Wärmeverbrauchs relevant sind. Die so ermittelten und bewerteten Verbrauchseinheiten des Wärmeverbrauchs werden aufaddiert und in dem auf dem Heizkörper montierten Messgerät und in einem dem Heizkörper zugeordneten Speicherplatz in der Abrechnungszentrale gespeichert.

Bedingt durch die grosse Zahl verschiedener Heizkörpertypen und in Fällen, in welchen Sonderausführungen zum Einsatz kommen, ist jedoch der durch die physikalischen Eigenschaften eines bestimmten Heizkörpertyps gegebene Bewertungsfaktor bei der Montage des Messgerätes auf dem Heizkörper oft noch nicht bekannt, so dass es nicht möglich ist, der passende Gesamtbewertungsfaktor in das Messgerät einzugeben.

Nach dem heutigen Stand der Technik müssen in solchen Fallen die erforderlichen Bewertungsfaktoren für die Bewertung der unbewerteten Verbrauchseinheiten des Wärmeverbrauchs genau an Ende einer Abrechnungsperiode oder genau zum Zeitpunkt einer Zwischenablesung in das Messgerät und in die Abrechnungszentrale eingegeben bzw. gespeichert werden, um die bisher aufgelaufenen bzw. aufaddierten Verbrauchseinheiten nicht zu verfälschen. Die bis dann aufgelaufenen Verbrauchseinheiten dieser Abrechnungsperiode müssen zusätzlich umbewertet, d.h. unter Berücksichtigung der neu eingegebenen Bewertungsfaktoren umgerechnet werden, was bei einer hohen Zahl von Heizkörpern einen entsprechend hohen Aufwand erfordert.

Es ist erwünscht, die oben erwähnte Eingabe und Speicherung der erforderlichen Bewertungsfaktoren und die Bewertung der unbewerteten Verbrauchseinheiten des Wärmeverbrauchs zu einem beliebigen Zeitpunkt durchführen zu können, und den Aufwand zu minimieren, der für die Umbewertung der abgelaufenen Verbrauchseinheiten erforderlich ist.

Der Erfindung liegt daher die Aufgabe zugrunde ein Verfahren der oben erwähnten Art zur Verfügung zu stellen, bei dem der Gesamtbewertungsfaktor für einen bestimmten Heizkörpertyp erst nach der Inbetriebnahme des Verbrauchs-Messsystems in das am Heizkörper montierte Messgerät zu einem beliebigen Zeitpunkt eingegeben werden darf, und mit dem der Aufwand für die Umbewertung der bis dahin abgelaufenen Verbrauchseinheiten möglichst klein ist.

Diese Aufgabe wird erfindungsgemäss mit einem Verfahren der oben erwähnten Art gelöst, dessen wesentlichen Merkmale im kennzeichnenden Teil des Anspruchs 1 definiert sind. Ausgestaltungen des erfindungsgemässen Verfahrens sind durch die abhängigen Ansprüche definiert.

Die mit der Erfindung erzielten Vorteile sind im wesentlichen wie folgt:

1) Eine nachträgliche Eingabe des Gesamtbewertungsfaktors in jedem Messgerät bzw. in der Datenbank der Abrechnungszentrale ist zu jeder Zeit möglich, wobei eine Umbewertung der bis dahin abgelaufenen Verbrauchseinheiten automatisch erfolgt, d. h. der Anzeigewert für alle bis dann aufgelaufenen Verbrauchseinheiten wird automatisch korrigiert.

2) Die Nachbewertung der Verbrauchseinheiten kann auch innerhalb einer Abrechnungsperiode erfolgen, ohne dass die bis dann aufgelaufenen Verbrauchseinheiten ungerechnet werden müssen.

3) Bei einer Nachbewertung wird der interne Zählerstand des Messgerätes, welcher ein unbewerteter Zählerstand ist, auch bei mehrfacher oder fehlerhafter Nachbewertung nie verändert. Es kann daher auch nachträglich eine fehlerhafte Abrechnung berichtigt werden.

4) Für die Abrechnung der Heizkosten kann immer unter Berücksichtigung der aktuellsten in der Datenbank der Abrechnungszentrale vorhandenen Daten bezüglich der Bewertungsfaktoren wie der Kopplungsfaktor $K_c$ (auch c-Wert genannt) und der Wärmeleistung $K_Q$ durchgeführt werden. Diese Daten werden über das Auslesemedium dann automatisch in das Messgerät übertragen.

Ein Ausführungsbeispiel des erfindungsgemässen Verfahrens wird nachstehend anhand der beiliegenden Figuren beschrieben. Es zeigen

Fig. 1 ein Flussdiagramm eines Verfahrens nach dem gegenwärtigen Stand der Technik

Fig. 2 ein Flussdiagramm eines erfindungsgemässen Verfahrens

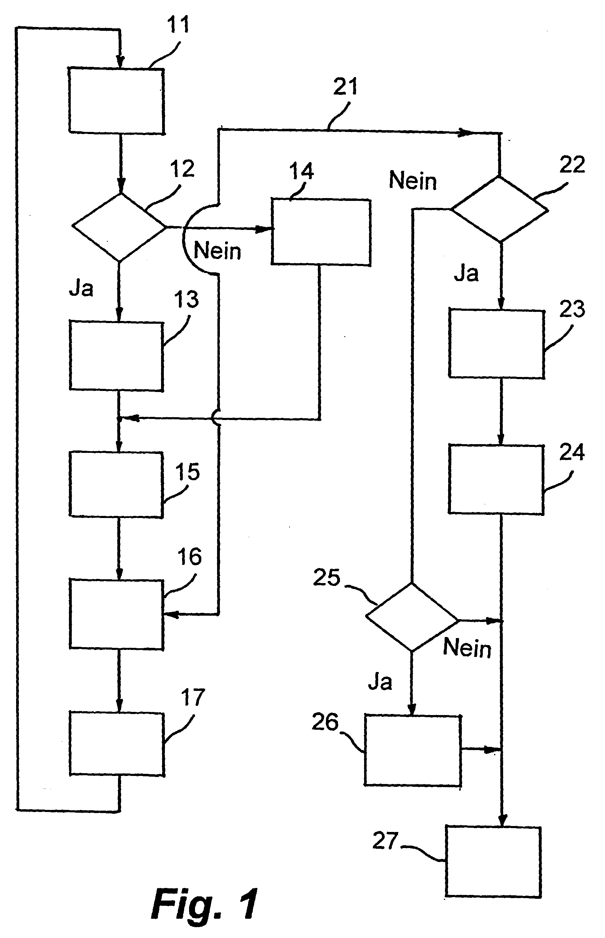

Beschreibung eines Verfahrens nach dem gegenwärtigen Stand der Technik anhand der Figur 1

Figur 1 zeigt das Flussdiagramm eines bekannten Verfahrens zur Abrechnung der individuellen Heizungskosten für eine Vielzahl von Heizkörpern, welche Wärme von einer zentralen Heizungsanlage beziehen. Die Verfahrensschritte dieses bekannten Verfahrens sind in der folgenden Tabelle 1 definiert.

Tabelle 1

| SCHRITT | HANDLUNG |
|---|---|
| 11 | Messung der Raumtemperatur $t_R$ mit dem Raumsensor und der Heizkörpertemperatur $t_H$ mit dem Heizkörpersensor |
| 12 | Feststellung: gehört das Messgerät zu einer Gruppe von Messgeräten, welche mit einem einheitlichen (d.h. nicht individuellen) Bewertungsfaktor eingerichtet sind? Wenn ja, weiter mit Schritt 14. Wenn nein, weiter mit Schritt 14. |
| 13 | Im Messgerät durchgeführte Berechnung von unbewerteten Verbrauchseinheiten mit den einheitlichen Bewertungsfaktoren und weiter mit Schritt 15 |
| 14 | Im Messgerät durchgeführte Berechnung von bewerteten Verbrauchseinheiten mit den Bewertungsfaktoren, die dem Heizkörper entsprechen, auf dem das Messgerät montiert ist, und weiter mit Schritt 15 |
| 15 | Im Messgerät durchgeführtes Aufsummieren der berechneten Verbrauchseinheiten |
| 16 | Im Messgerät durchgeführtes Abspeichern der aufsummierten, berechneten Verbrauchseinheiten |
| 17 | Anzeigen der abgespeicherten Verbrauchseinheiten auf der Anzeige des Messgerätes und weiter mit Schritt 11 |
| 21 | Übertragung von Daten für die Abrechnung vom Messgerät zur Abrechnungszentrale oder Übertragung von Daten oder Steuersignalen von der Abrechnungszentrale zum Messgerät |
| 22 | Feststellung: Sind Werte von unbewerteten Verbrauchseinheiten aus einer oder mehreren Zwischenauslesung(en) vorhanden, welche Werte bewertet werden müssen? Wenn ja, weiter mit Schritt 23. Wenn nein weiter mit Schritt 26. |
| 23 | Bewertung der unbewerteten Verbrauchseinheiten aus der einen oder den mehreren Zwischenauslesung(en) |
| 24 | Addieren des Ergebnisses vom Schritt 23 mit den Restwerten des verbleibenden Abrechnungszeitraumes und weiter mit Schritt 27 |
| 25 | Feststellung: gehört das Messgerät zu einer Gruppe von Messgeräten, welche mit einem einheitlichen (d.h. nicht individuellen) Bewertungsfaktor eingerichtet sind? Wenn nein, weiter mit Schritt 27. Wenn ja, weiter mit Schritt 26 |
| 26 | Bewertung der einheitlich bewerteten Verbrauchseinheiten mit den individuellen Bewertungsfaktoren, die für den einzelnen Heizkörpern geeignet sind und weiter mit Schritt 25. |
| 27 | Abrechnung mit bewerteten Verbrauchseinheiten |

Durch die Messung der Temperaturen $t_H$ bzw. $t_R$ gemäss Schritt 11 werden periodische Werte dieser Temperaturen mit einem Abtastzeitintervall $\Delta\tau$ erfasst. Diese Werte werden für die Berechnung der Verbrauchseinheiten gemäss Schritt 13 verwendet.

Die Berechnung von bewerteten Verbrauchseinheiten gemäss Verfahrensschritt 14 , d.h. mit den Bewertungsfaktoren, die dem Heizkörper entsprechen wird mit den folgenden Formeln durchgeführt:

$$E_2' = K_Q * F_2 * [(t_H - t_R) / c_{HR}(1-c_H)]^x \quad \text{(Zweifühlermodus)} \tag{1}$$

bei einer Lufttemperatur $t_L < 25°C$
und mit

$$E_1' = K_Q {}^*F_2 {}^* [(t_H - t_{L,2}) / (1-c_H)]^x \text{ (Einfühlermodus)} \qquad (2)$$

bei einer Lufttemperatur $t_L > 25°C$
wobei

$$K_Q = Q_n' / Q_G' \qquad (3)$$

$$F_2 = (1/59{,}44)^x \qquad (4)$$

$$c_{HR} = (t_H - t_R) / (t_H - t_L) \qquad (5)$$

$$c_H = 1 - [(t_H - t_L) / (t_m - t_L)] \qquad (6)$$

$$t_m = T_{1H} [(t_H - t_{H,alt})/\Delta\tau] + [c_u (t_H - t_R)/c_{HR} (1-c_u)] + t_H \qquad (7)$$

$$t_L = T_{1R} [(t_R - t_{R,alt})/\Delta\tau] + [(1 - c_{HR}) (t_H - t_R)/c_{HR}] + t_R \qquad (8)$$

Die Bedeutung der in den Formeln (1) bis (8) verwendeten Zeichen ist in der folgenden Tabelle 2 angegeben.

Tabelle 2

| Zeichen | Einheit | Bedeutung |
|---|---|---|
| $E_1'$ | 1/h | bewertete Anzeigegeschwindigkeit im Zweifühler-Modus |
| $E_2'$ | 1/h | bewertete Anzeigegeschwindigkeit im Einfühler-Modus |
| $C_H$ | | c-Wert des Heizkörpersensors |
| $c_{HR}$ | | Gerätekennzahl |
| $K_Q$ | | Bewertungsfaktor Wärmeleistung |
| $Q_G'$ | W | Grundleistung |
| $Q_n'$ | W | Normale Leistung des Heizkörpers |
| $t_H$ | °C | Heizkörpertemperatur |
| $t_{H,alt}$ | °C | alter Wert der Heizkörpertemperatur |
| $t_L$ | °C | Lufttemperatur |
| $t_{L,2}$ | °C | Bezugs-Lufttemperatur im Zweifühler-Modus |
| tm | °C | mittlere Heizkörpertemperatur |
| $t_R$ | °C | Raumtemperatur |
| $t_{R,alt}$ | °C | alter Wert der Raumtemperatur |
| $T_{1H}$ | h | Zeitkonstante des Heizkörpers |
| $T_{1R}$ | h | Zeitkonstante des Raums |
| $\tau$ | h | Zeit |
| $\Delta\tau$ | h | interne Abtastzeit des Messgerätes |
| x | | Exponent wenn einen Heizkostenverteiler mit 2 Sensoren verwendet wird |

Die in der Tabelle 2 erwähnte Anzeigegeschwindigkeit beschreibt die Menge der Verbrauchseinheiten welche innerhalb eines Messintervalles (z. Beispiel 4 Minuten) berechnet werden. Über den Gesamten Abrechnungszeitraum kann die Berechnung der Verbrauchseinheiten wie folgt beschrieben werden:

Verbrauchseinheiten = (Anzeigegeschwindigkeit) * Anzahl Messintervalle).

Gemäss der entsprechenden Norm gilt für den c-Wert folgende Definition:

Der c-Wert ist der Ausdruck für den Grad der thermischen Ankopplung der Temperatursensoren an die zu erfassenden Temperaturen. Er ist als Temperaturdifferenz-Verhältnis nach der folgenden Gleichung definiert:

$$c = 1 - (\Delta t_S / \Delta t).$$

In dieser Gleichung bedeuten:

| $\Delta t_S$ | Temperaturdifferenz der Sensoren, z.B. $t_{HS}$ -$t_{RS}$ |
|---|---|
| $\Delta t$ | Heizmediumübertemperatur $t_m$-$t_L$ |
| $t_{HS}$ | Temperatur des heizkörperseitigen Sensors |
| $t_{RS}$ | Temperatur des raumseitigen Sensors |
| $t_m$ | mittlere Heizmediumtemperatur |
| $t_L$ | Referenz-Luftraumtemperatur |

Für die sogenannte Grundleistung $Q_G'$ wird in der Norm den Fixwert von 1000W festgelegt.

Der Wert $Q_n$ der normalen Leistung des Heizkörpers wird in der Norm wie folgt beschrieben :

Die Normleistung Qn ist die Wärmeleistung des Heizkörpers in einer klimastabilen Prüfkabine bei Vorlauf-, Rücklauf- und Lufttemperaturen von 90°C, 70°C und 20°C, wobei die Lufttemperatur 0,75m über dem Boden in 1,5m Abstand vor der Heizfläche gemessen wird.

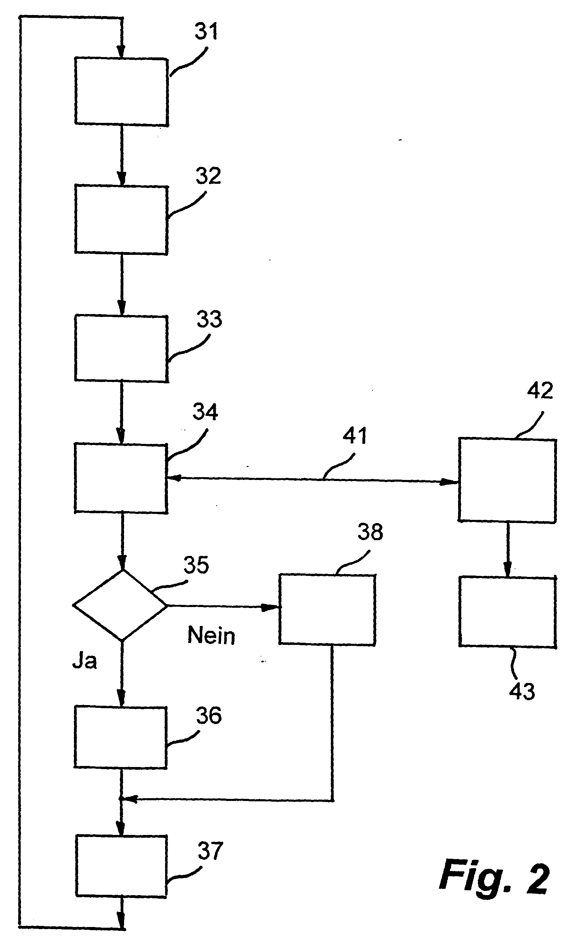

Beschreibung eines Ausführungsbeispiels eines erfindungsgemässen Verfahrens anhand der Fig. 2

Erfindungsgemäss werden die als Messgeräte verwendeten Heizkostenverteiler ab Werk mit einem einheitlichen, d.h. nicht individuellen, Bewertungsfaktor ausgeliefert (Einheitsskalierung der Messgeräte). Bei der Montage wird je nach verwendeter Montageart in das Messgerät und in die Abrechnungszentrale einen Gerätekennwert und - wenn vorhanden - auch einen individuellen Gesamtbewertungsfaktor eingegeben und dort gespeichert.

Sind die nötigen Daten zur Berechnung des Gesamtbewertungsfaktors zur Zeit der Montage nicht bekannt, kann erfindungsgemäss das Gerät ohne den Gesamtbewertungsfaktor montiert und in Betrieb genommen werden. Da mit den einheitlichen Bewertungsfaktoren eine korrekte, individuelle Berechnung der Verbrauchseinheiten jedes Heizkörpers nicht möglich ist, werden die mit den einheitlichen Bewertungsfaktoren berechneten Verbrauchseinheiten unbewertete Verbrauchseinheiten genannt

Die nachträgliche Bewertung des Verbrauchs von jedem Heizkörper mit dem entsprechenden Gesamtbewertungsfaktor ist jederzeit ohne zusätzliche Umrechnung der bis dahin abgelaufenen Verbrauchseinheiten lediglich durch Eingabe des Gesamtbewertungsfaktors möglich.

Dies ist möglich, da in die einzelnen Datenspeicher (aktueller Speicher, Abrechnungsspeicher, alle Monatsspeicher) von jedem Heizkörper die unbewerteten Verbrauchseinheiten des Wärmeverbrauchs eines Heizkörpers gespeichert werden, und für die Anzeige bzw. Abrechnung die unbewertete Verbrauchseinheiten des Wärmeverbrauchs eines Heizkörpers jeweils mit dem aktuell im dem Messgerät des Heizkörpers und in der Datenbank der Abrechnungszentrale in einem dem Heizkörper zugeordneten Speicherplatz gespeicherten Gesamtbewertungsfaktor automatisch neu bewertet, d.h. errechnet werden. Bei dieser Bewertung werden sämtliche Altwerte des Wärmeverbrauchs des Heizkörpers automatisch berücksichtigt.

Die oben erwähnte nachträgliche Eingabe des Gesamtbewertungsfaktors kann je nach Geräteausführung mittels Dateninterface vor Ort, durch das Auslesemedium, oder Datenfernübertragung erfolgen.

Figur 2 zeigt das Flussdiagramm eines erfindungsgemässen Verfahrens zur Abrechnung der individuellen Heizungskosten für eine Vielzahl von Heizkörpern, welche Wärme von einer zentralen Heizungsanlage beziehen. Die Verfahrensschritte des erfindungsgemässen Verfahrens sind in der folgenden Tabelle 3 definiert.

Tabelle 3

| SCHRITT | HANDLUNG |
|---|---|
| 31 | Messung der Raumtemperatur $T_R$ mit dem Raumsensor und der Heizkörpertemperatur $T_H$ mit dem Heizkörpersensor |
| 32 | Berechnung von unbewerteten Verbrauchseinheiten mit den provisorischen Bewertungsfaktoren und weiter mit Schritt 33 |
| 33 | Aufsummieren der unbewerteten Verbrauchseinheiten |
| 34 | Abspeichern der aufsummierten unbewerteten Verbrauchseinheiten |
| 35 | Feststellung: gehört das Messgerät zu einer Gruppe von Messgeräten, welche mit einem einheitlichen (d.h. nicht individuellen) Bewertungsfaktor eingerichtet sind? Wenn ja, weiter mit Schritt 36. Wenn nein, weiter mit Schritt 38. |
| 36 | Bewertung der unbewerteten Verbrauchseinheiten mit einheitlichen Bewertungsfaktoren |
| 37 | Anzeigen der mit Schritt 36 oder 38 errechneten Verbrauchseinheiten |
| 38 | Im Messgerät durchgeführte Berechnung von bewerteten Verbrauchseinheiten mit den Bewertungsfaktoren, die dem Heizkörper entsprechen, auf dem das Messgerät montiert ist, und weiter mit Schritt 37 |
| 41 | Übertragung von Daten für die Abrechnung vom Messgerät zur Abrechnungszentrale oder Übertragung von Daten oder Steuersignalen von der Abrechnungszentrale zum Messgerät |
| 42 | Bewertung der einheitlich bewerteten Verbrauchseinheiten mit den individuellen Bewertungsfaktoren, die für den einzelnen Heizkörpern geeignet sind und weiter mit Schritt 43 |
| 43 | Abrechnung mit bewerteten Verbrauchseinheiten |

Durch die Messung der Temperaturen $t_H$ bzw. $t_R$ gemäss Schritt 31 werden periodische Werte dieser Temperaturen mit einem Abtastzeitintervall $\Delta\tau$ erfasst. Diese Werte werden für die Berechnung der Verbrauchseinheiten gemäss Schritt 32 verwendet.

Die Berechnung von unbewerteten Verbrauchseinheiten $E_u'$ gemäss Schritt 32 wird mit den nachstehenden Formeln durchgeführt:

$$E_{2u}' = F_2 * F_u \left[ (t_H - t_R) / c_{HR} (1-c_u) \right]^x \text{ (Zweifühlermodus)} \qquad (9)$$

bei einer Lufttemperatur $t_L < 25°C$
und mit

$$E_{1u}' = F_2 * F_u \left[ (t_H - t_{L,2}) / (1-c_u) \right]^x \text{ (Einfühlermodus)} \qquad (10)$$

bei einer Lufttemperatur $t_L > 25°C$
wobei

$$F_u = (c_{HR} (1-c_u))^x \qquad (11)$$

Die Bedeutung der in den Formeln (9) bis (11) verwendeten Zeichen $E_{2u}'$, $E_{2u}'$ und $c_u$ ist in der folgenden Tabelle 4 angegeben.

Tabelle 4

| Zeichen | Einheit | Bedeutung |
|---|---|---|
| $E_{2u}'$ | 1/h | unbewertete Anzeigegeschwindigkeit im Zweifühler-Modus |
| $E_{1u}'$ | 1/h | unbewertete Anzeigegeschwindigkeit im Einfühler-Modus |

Tabelle 4 (fortgesetzt)

| Zeichen | Einheit | Bedeutung |
|---------|---------|-----------|
| $c_u$ | | Basiswert, das für die Berechnung der unbewerteten Verbrauchseinheiten anstelle von $c_H$ in den Formeln (1) und (2) verwendet wird. |

Die Bewertung zur Anzeige bzw. Abrechnung der Verbrauchseinheiten erfolgt anschliessend mit folgenden Formeln:

$$E_2' = K_Q * K_{c2} * E_{2u}' \quad \text{(Zweifühlermodus)} \tag{12}$$

bei einer Lufttemperatur $t_L < 25°C$
und mit

$$E_1' = K_Q * K_{c2} * E_{1u}' \quad \text{(Einfühlermodus)} \tag{13}$$

bei einer Lufttemperatur $t_L > 25°C$ wobei $K_{c2}$ der sogenannte Bewertungsfaktor c-Wert oder Kopplungsfaktor ist, welcher durch $K_{c2} = [1 / c_{HR} (1-c_H)]^x$ definiert ist und das Produkt $K_Q * K_{c2}$ der Gesamtbewertungsfaktor ist. Der Gesamtbewertungsfaktor kann weitere Korrekturfaktoren enthalten.

Durch Einsetzen des Ausdrucks von $E_{2u}'$ gemäss Formel (6), $E_{1u}'$ gemäss Formel (7) und $F_u$ gemäss Formel (8) kommt man zu folgenden Ausdrücken für $E_2'$ bzw. $E_1'$:

$$E_2' = K_Q * F_2 * [(t_H - t_R) / c_{HR} (1-c_H)]^x \tag{14}$$

für den Zweifühlermodus,
und

$$E_1' = K_Q * F_2 * [(t_H - t_{L,2}) / (1-c_H)]^x \tag{15}$$

für den Einfühlermodus.

Aus den Formeln (14) und (15) ist es ersichtlich, dass mit dem erfindungsgemässen Verfahren die gleiche Werte von $E_2'$ und $E_1'$ wie mit dem Verfahren gemäss dem Stand der Technik [siehe Formel (1) und (2)] berechnet werden, das erfindungsgemässe Verfahren gemäss Tabelle 3 und Fig. 2 hat aber die oben erwähnten Vorteile

**Patentansprüche**

1. Verfahren zur Ermittlung des Energieverbrauchs von einer Vielzahl von Heizkörpern, bei welchem Verfahren die Temperatur jedes Heizkörpers gemessen wird, dadurch gekennzeichnet, dass

   (a) in einem auf jedem Heizkörper montierten Messgerät anhand der gemessenen Temperaturwerte unbewertete Verbrauchseinheiten ($E_{1u}'$, $E_{2u}'$) des Wärmeverbrauchs berechnet werden,
   (b) bei jedem Heizkörper die unbewerteten Verbrauchseinheiten in dem auf ihm montierten Messgerät aufaddiert werden, um ihre Summe zu bilden, und
   (c) diese Summe im Messgerät und in einer Abrechnungszentrale mit einem oder mehreren Bewertungsfaktoren multipliziert wird, um einen bewerteten Wert des Wärmeverbrauchs des Heizkörpers zu erhalten, wobei wenigstens einer der Bewertungsfaktoren ($K_{c2}$) den physikalischen Eigenschaften des Heizkörpertyps entspricht, die für die Ermittlung des Wärmeverbrauchs relevant sind.

2. Verfahren gemäss Anspruch 1, dadurch gekennzeichnet, dass

   (a) bei jedem Heizkörper die Summe der unbewerteten Verbrauchseinheiten ($E_{1u}$, $E_{2u}'$) in einem Speicher gespeichert wird, der in dem Messgerät enthalten ist,
   (b) die im Speicher des Messgerätes gespeicherten Summe der unbewerteten Verbrauchseinheiten jedes Heizkörpers zu einem dem Heizkörper zugeordneten Speicherplatz in einer Abrechnungszentrale übertragen wird, und
   (c) die in diesem Speicherplatz der Abrechnungszentrale gespeicherte Summe der unbewerteten Verbrauchseinheiten ($E_{1u}'$, $E_{2u}'$) mit einem oder mehreren Bewertungsfaktoren multipliziert wird, um einen bewerteten Wert des Wärmeverbrauchs des Heizkörpers zu erhalten, wobei wenigstens einer der Bewertungsfaktoren

($K_{c2}$) den physikalischen Eigenschaften des Heizkörpertyps entspricht, die für die Ermittlung des Wärmeverbrauchs relevant sind.

3. Verfahren gemäss Anspruch 1, dadurch gekennzeichnet, dass die im Speicher des Messgerätes des Heizkörpers gespeicherte Summe der unbewerteten Verbrauchseinheiten im Messgerat mit einem oder mehreren Bewertungsfaktoren multipliziert wird, um einen bewerteten Wert des Wärmeverbrauchs des Heizkörpers zu erhalten, wobei wenigstens einer der Bewertungsfaktoren ($K_{c2}$) den physikalischen Eigenschaften des Heizkörpertyps entspricht, die für die Ermittlung des Wärmeverbrauchs relevant sind.

**Fig. 1**

**Fig. 2**

Europäisches
Patentamt

**EUROPÄISCHER RECHERCHENBERICHT**

Nummer der Anmeldung

EP 98 81 1261

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | EP 0 616 201 A (LANDIS & GYR BUSINESS SUPPORT) 21. September 1994 * Seite 2, Zeile 7 - Zeile 14; Anspruch 1; Abbildungen * | 1,3 | G01K17/06 |
| X | WO 82 01589 A (ISS CLORIUS INT AS ;LARSEN EGON C (DK); DOBRONYI ISTVAN (DK)) 13. Mai 1982 * Seite 3, Zeile 27; Ansprüche 1,5; Abbildungen * | 1-3 | |
| X | DE 297 19 851 U (HELICOM) 8. Januar 1998 * Anspruch 3 * | 1,2 | |
| X | DE 196 41 324 A (KUNDO SYSTEMTECHNIK GMBH) 9. April 1998 * Seite 2, Zeile 57 - Zeile 61 * | 1,2 | |
| A | DE 32 34 850 A (ZIESEL GERTRUD) 22. März 1984 * Zusammenfassung * | 1 | |
| A | DE 196 03 407 A (EWT ELEKTRO U NACHRICHTENTECHN) 7. August 1997 * das ganze Dokument * | 1 | RECHERCHIERTE SACHGEBIETE (Int.Cl.6) G01K |
| A | DE 93 17 309 U (OFFENHAUSSER) 27. Januar 1994 * Anspruch 1 * | 1 | |

Der vorliegende Recherchenbericht wurde für alle Patentansprüche erstellt

| Recherchenort | Abschlußdatum der Recherche | Prüfer |
|---|---|---|
| DEN HAAG | 3. Mai 1999 | Ramboer, P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.......................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
### ÜBER DIE EUROPÄISCHE PATENTANMELDUNG NR.

EP 98 81 1261

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-05-1999

| Im Recherchenbericht angeführtes Patentdokument | | Datum der Veröffentlichung | Mitglied(er) der Patentfamilie | | Datum der Veröffentlichung |
|---|---|---|---|---|---|
| EP 0616201 | A | 21-09-1994 | CZ | 9400584 A | 19-10-1994 |
| WO 8201589 | A | 13-05-1982 | DK | 437780 A | 17-04-1982 |
| | | | AU | 7726581 A | 21-05-1982 |
| | | | EP | 0062064 A | 13-10-1982 |
| | | | JP | 57501601 T | 02-09-1982 |
| | | | US | 4473307 A | 25-09-1984 |
| DE 29719851 | U | 08-01-1998 | KEINE | | |
| DE 19641324 | A | 09-04-1998 | KEINE | | |
| DE 3234850 | A | 22-03-1984 | KEINE | | |
| DE 19603407 | A | 07-08-1997 | KEINE | | |
| DE 9317309 | U | 27-01-1994 | KEINE | | |

EPO FORM P0461

Für nähere Einzelheiten zu diesem Anhang : siehe Amtsblatt des Europäischen Patentamts, Nr. 12/82